# EUROPÄISCHE PATENTSCHRIFT

(11) **EP 1 491 422 B1**
(45) Veröffentlichungstag und Bekanntmachung des Hinweises auf die Patenterteilung: **04.08.2010**
(21) Anmeldenummer: 04014876.9
(22) Anmeldetag: 24.06.2004
(51) Int. Cl.: B62B 7/06

(54) **Kinderwagen mit Faltmechanismus**
Pram with folding mechanism
Poussette ayant un mécanisme de pliage

(30) Priorität: 26.06.2003 DE 10328886
(43) Veröffentlichungstag der Anmeldung: 29.12.2004
(73) Patentinhaber: HAUCK GmbH & Co. KG, 96242 Sonnefeld (DE)
(72) Erfinder: Feyler, Beatrice, 96242 Sonnefeld (DE)
(74) Vertreter: von Eichel-Streiber, Caspar

(56) Entgegenhaltungen:
- EP-A- 1 488 981
- FR-A1- 2 474 426
- FR-A1- 2 708 550
- US-A- 4 697 823

## Beschreibung

Die Erfindung betrifft einen Kinderwagen gemäß dem Oberbegriff des Anspruchs 1.

Derartige Kinderwagen sind allgemein bekannt und weisen ein auf Rädern verfahrbares Rahmengestell auf, welches aus in zwei parallelen senkrechten Ebenen aneinander angelenkten, z.T. scherenartig angeordneten Gestellholmen und einem z.B. U-förmigen Schieber besteht, wobei entsprechende Gestellholme der beiden Ebenen jeweils ein Paar bilden. Ferner besitzen derartige Kinderwagen meist einen Aufsatz, der eine Sitzfläche und eine Rückenlehne aufweist. Des weiteren ist an jeder Seite des Kinderwagens ein sich in der Regel schräg von hinten oben nach vorne unten erstreckender Gestellholm angeordnet. Diese Gestellholme sind benutzerseitig durch einen Griff miteinander verbunden, so dass die Gestellholme und der Griff einen Schieber bilden.

Das Zusammenfalten der bekannten Kinderwagen erfolgt in der Regel durch das Lösen einer Verriegelungseinrichtung, die entweder an einer Seite oder an beiden Seiten des Kinderwagens an den entsprechenden Gestellholmen in Höhe eines Gelenks, um dessen Achse der Kinderwagen zusammengefaltet wird, angebracht ist.

Zur Entriegelung der Verriegelungseinrichtung muß die Person, die den Kinderwagen bedient, relativ weit vom Griff entfernt tätig werden, während gleichzeitig der Kinderwagen am Griff gegen ein unbeabsichtigtes Wegrollen gesichert werden muß. Ist eine Person alleine mit dem Kinderwagen unterwegs, so bedeutet dies, daß sich die betreffende Person zum Entriegeln der Verriegelungseinrichtung über den Schieber des Kinderwagens hinweg beugen muß, während gleichzeitig mit einer Hand und/oder dem Oberschenkel der Kinderwagen gegen ein Wegrollen und ggf. auch schlagartiges Zusammenklappen gesichert wird. Kinderwagen nach dem Stand der Technik weisen deshalb den Nachteil auf, daß das Zusammenfalten für den Bediener äußerst unbequem ist. Weiterhin kann es durch Fehlfunktionen der Verriegelungseinrichtung aufgrund zunehmender Gebrauchsdauer des Kinderwagens (z.B. durch Verschleiß, nachlassende Federkraft od. dgl.) oder durch eine unsachgemäße Bedienung der nur einen Verriegelungseinrichtung zu einer ungewollten Zusammenfaltung des Kinderwagens kommen. Eine weitere Gefahrenquelle stellt auch eine unbeabsichtigte Betätigung der Verriegelungseinrichtung dar. Die vorgenannten Gefahrenquellen stellen eine nicht unerhebliche Verletzungsgefahr sowohl für das im Wagen sitzende oder schlafende Kind, als auch die Person, die den Kinderwagen schiebt, dar.

FR 270 85 50 offenbart einen gattungsgemäßen Kinderwagen.

Aufgabe der vorliegenden Erfindung ist es, einen Kinderwagen anzugeben, der sich bei einfacher Konstruktion durch hohe Funktionssicherheit, insbesondere hohe Sicherheit gegen unbeabsichtigte Zusammenfaltung auszeichnet.

Diese Aufgabe wird durch die kennzeichnenden Merkmale des Anspruchs 1 gelöst. Ein wesentlicher Punkt der vorliegenden Erfindung liegt also darin, daß der Faltmechanismus zwei voneinander unabhängige Bedienungseinrichtungen umfaßt derart, daß zum Zweck einer Zusammenfaltung die gleichzeitige Betätigung beider Bedienungseinrichtungen erforderlich ist. Dadurch, daß zum Zusammenfalten des erfindungsgemäßen Kinderwagens zwei voneinander unabhängige Bedienungseinrichtungen gleichzeitig bedient werden müssen, wird die Gefahr eines unbeabsichtigten Zusammenfaltens des Kinderwagens durch eine unsachgemäße, evtl. sogar unbeabsichtigte Betätigung einer Verriegelungseinrichtung oder durch einen Defekt derselben verringert.

Vorzugsweise steht eine erste Bedienungseinrichtung über ein Koppelelement, insbesondere einen elastisch vorgespannten Koppelstift, mit einer zweiten Bedienungseinrichtung derart in Wirkeingriff, daß bei Bewegung der zweiten Bedienungseinrichtung in die Stellung für eine Zusammenfaltung des Kinderwagens die erste Bedienungseinrichtung durch das Koppelelement entriegelbar ist, so daß diese in eine Stellung bringbar ist, in der sich der Kinderwagen zusammenfalten läßt. Die eben beschriebene Konstruktion stellt eine Realisierungsmöglichkeit des erfindungsgemäßen Wagens mit einem geringen konstruktiven Aufwand dar. Durch das Anbringen des Koppelelements kann eine der beiden Bedienungseinrichtungen so lange gesperrt werden, bis die andere Bedienungseinrichtung in die Stellung für eine Zusammenfaltung des Kinderwagens gebracht ist. Betätigt der Bediener dann die bis zu diesem Zeitpunkt gesperrte Bedienungseinrichtung (während die erste Bedienungseinrichtung betätigt bleibt), so kann der Kinderwagen zusammengefaltet werden.

In der erfindungsgemäßen Ausführungsform des Kinderwagens besitzen die erste und/oder die zweite Bedienungseinrichtung eine weitere Funktion am Kinderwagen. Diese Multifunktionalität der Bedienungseinrichtungen verringert den konstruktiven Aufwand bei der Herstellung des Kinderwagens und führt zu einer Kostenreduktion. Insbesondere dient die zweite Bedienungseinrichtung vorzugsweise gleichzeitig als Transportsicherung für den Kinderwagen in zusammengeklapptem Zustand.

In einer weiteren bevorzugten Ausführungsform handelt es sich um einen Kinderwagen mit einem etwa U-förmig gebogenen Schieber mit zwei Schenkeln und einem diese miteinander verbindenden Griff, bei dem die erste Bedienungseinrichtung gleichzeitig eine Veränderung der Längsposition des Schiebers bzw. des Griffs desselben erlaubt. Neben der oben genannten Multifunktionalität der Bedienungseinrichtungen hat dieses bevorzugte Ausführungsbeispiel den Vorteil, daß sich die Bedienungseinrichtung am Griff des Kinderwagens befindet und somit für die bedienende Person leicht zugänglich ist.

Die zweite Bedienungseinrichtung umfaßt vorzugsweise eine auf einem der beiden Schieberholme längs- oder drehverschieblich gelagerte Schiebehülse, die einen einfachen, störunanfälligen Betrieb der zweiten Bedienungseinrichtung sicherstellt.

Die Schiebehülse weist in einer weiteren bevorzugten Ausführungsform einen Sicherungshaken auf, der in zusammengeklapptem Zustand des Kinderwagens mit einem komplementären Transportsicherungselement an dem an den Schieber heranklappbaren Teil des Kinderwagens in Eingriff bringbar ist. Der angesprochene Sicherungshaken ist dabei gleichzeitig für eine leichtere Bedienung der Schiebehülse von Vorteil. So kann die bedienende Person die Schiebehülse am Sicherungshaken zur Betätigung ergreifen, ohne, insbesondere im Falle schlechten Wetters, wenn die Hände des Bedieners naß sind, Gefahr zu laufen, abzurutschen.

In einer konstruktiv besonders einfachen Variante des erfindungsgemäßen Kinderwagens ist das komplementäre Transportsicherungselement an der Hinterachse des Kinderwagens angeordnet und als Gegenhaken oder Hakenöse oder dgl. ausgebildet.

Die Schiebehülse, der Sicherungshaken und ggf. das komplementäre Transportsicherungselement sind bevorzugterweise aus Leichtmetall, insbesondere Aluminium und/oder aus Kunststoff gefertigt. Die genannten Materialien ermöglichen es, das Gewicht des erfindungsgemäßen Kinderwagens niedrig zu halten.

Um bei Loslassen der zweiten Bedienungseinrichtung eine automatische Rückstellung derselben in eine "Verriegelungsposition", d.h. in eine Position, in der der Kinderwagen sich nicht zusammenfalten läßt, sicherzustellen, erfolgt die Betätigung der zweiten Bedienungseinrichtung vorzugsweise gegen die Wirkung eines elastischen Elements, insbesondere einer Feder.

Die Betätigung der zweiten Bedienungseinrichtung erfolgt vorzugsweise durch Ziehen, Drücken oder Drehen der Schiebehülse längs des oder um den zugeordneten Schenkel des Schiebers. Diese Betätigung ist einfach und ergonomisch.

In einer bevorzugten Ausführungsform wirkt der Schieber mit Rastelementen zur Verrastung des Kinderwagens im aufgefalteten Zustand derart zusammen, daß diese durch den Schieber nach Freigabe desselben durch die zweite Bedienungseinrichtung in eine Entriegelungsstellung bringbar sind, in der sich der Kinderwagen zusammenfalten läßt. Der Schieber wirkt in dieser Ausführungsform also mit den eigentlichen Rastelementen zur Verrastung des Kinderwagens im aufgefalteten Zustand zusammen; die zweite Bedienungseinrichtung übernimmt die Funktion einer zusätzlichen Sicherungsmaßnahme, wobei der Schieber erst dann in eine Entriegelungsstellung, d.h. also in eine Stellung, in der der Kinderwagen zusammenfaltbar ist, gebracht werden kann, wenn eine Freigabe dieser Position durch die zweite Bedienungseinrichtung erfolgt ist.

Nachstehend wird ein bevorzugtes Ausführungsbeispiel eines erfindungsgemäßen Kinderwagens anhand der beigefügten Zeichnungen näher erläutert. Diese zeigen in:
- Fig. 1: das Rahmengestell eines erfindungsgemäß ausgebildeten Kinderwagens in Seitenansicht;
- Fig. 2: das Rahmengestell eines erfindungsgemäß ausgebildeten Kinderwagens von hinten;
- Fig. 3: eine Schiebehülse einschließlich einer komplementären, stationären Hülse;
- Fig. 4: eine erfindungsgemäße Schiebehülse in Eingriff mit einem komplementären Transportsicherungselement, was einer Stellung der Schiebehülse in zusammengeklapptem Zustand des Kinderwagens entspricht;
- Fig. 5: ein Rastelement eines erfindungsgemäßen Kinderwagens in "verriegelter" Stellung; und
- Fig. 6: das Rastelement des Kinderwagens in einer Stellung, die eine Zusammenfaltung des Kinderwagens ermöglicht.

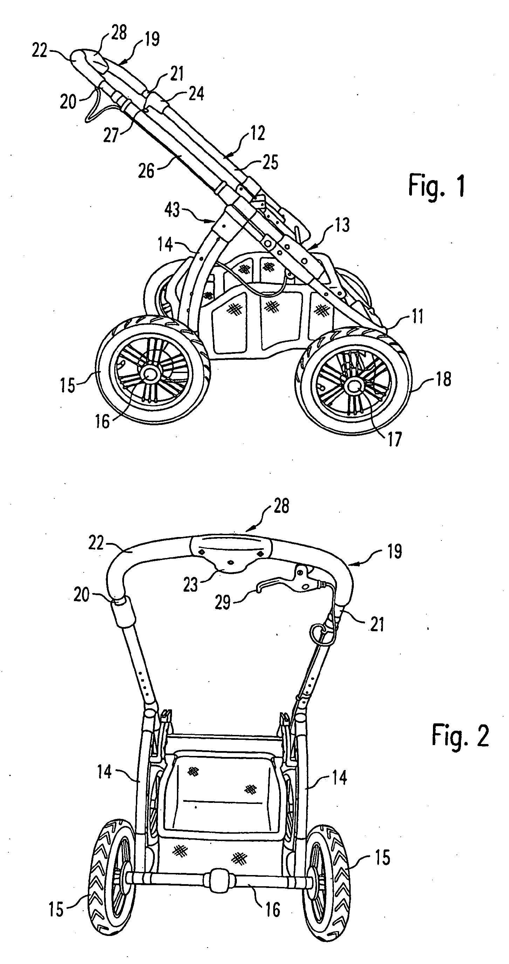

Der in Fig. 1 dargestellte Kinderwagen umfaßt eine Rahmenkonstruktion, die sich aus einem vorderen und einem hinteren U-förmigen Holm 11 und 12 zusammensetzt, wobei die beiden Holme mit ihren freien Schenkelenden einander zugekehrt montiert sind. Der hintere Holm 12 ist definiert durch zwei sich schräg von vorne unten nach hinten oben erstreckende Gestellholme 25, 26 sowie einen U-förmigen Schieber mit Griff und zwei Schenkeln 20, 21, die teleskopisch längsverschieblich gelagert sind. Zwischen den Schenkeln der beiden Holme ist ein Aufsatz mit einer Sitzfläche und einer Rückenlehne oder einer Liegeschale positionierbar (hier nicht gezeigt). Des weiteren ist an jeder Seite des Kinderwagens ein sich von den vorgenannten Holmen 11, 12 zu Hinterrädern 15 erstreckender Stützholm 14 vorgesehen. An den unteren Enden der Stützholme 14 ist jeweils ein Lager für eine den Hinterrädern 15 zugeordnete Hinterachse 16 ausgebildet. Vorderräder 18 sind an einer Vorderachse 17 drehbar gelagert. Diese befindet sich am vorderen Ende des vorderen Holms 11. Die Vorderräder 18 können zusätzlich jeweils um eine senkrechte Achse verschwenkbar gelagert sein, wodurch der Kinderwagen lenkbar wird.

Am hinteren Ende des hinteren Holms 12 befindet sich ein etwa U-förmig gebogener Schieber 19 mit zwei Schenkeln 20, 21 und einem diese miteinander verbindenden Griff 22. Diese beiden Schenkel sind innerhalb der zugeordneten sich von den Vorderrädern schräg nach hinten oben erstreckenden Gestellholme 25, 26 teleskopartig längsverschieblich gelagert. Am Griff 22 ist eine Bedienungseinrichtung 28 für eine Verstellung des Schiebers in Längsrichtung der Gestellholme 25, 26 angebracht. Diese weist ein Bedienungsorgan in Form eines nach vorne gerichteten Druckknopfes 23 auf (s. Fig. 2). Während der Knopf 23 gedrückt ist, kann der Schieber 19 bzw. können dessen Schenkel 20, 21 zum Zwecke der Verstellung des Schiebers in den Gestellholmen 25, 26 hin- und her bewegt sowie in gewünschter Position arretiert werden.

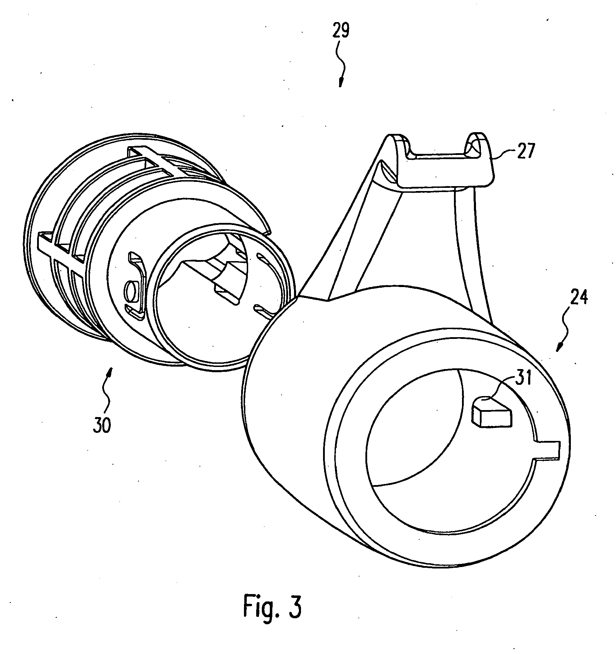

Am in Fahrtrichtung des Kinderwagens hier linken der beiden Schieberholme 25, 26 ist eine zweite Bedienungseinrichtung 29 (vgl. Fig. 3) mit einem Betätigungsorgan in Form einer längsverschieblich gelagerten Schiebehülse 24 angebracht. Die Schiebehülse 24 ist am zugeordneten Gestellholm längsverschieblich gelagert und weist einen nach unten abstehenden Sicherungshaken 27 auf, der mit der Hand bzw. einem Finger ergriffen werden kann, wodurch sich die Schiebehülse 24 leicht mit dem Finger in Richtung zum Griff 22 ziehen läßt.

Durch eine Betätigung der Schiebehülse 24 wird es, wie weiter unten ausführlicher erläutert wird, dem Benutzer ermöglicht, die beiden Schenkel des Schiebers 19 über eine vorbestimmte Stellung hinaus in die Gestellholme 25, 26 hineinzuschieben und den Kinderwagen zusammenzufalten. Die Betätigung der Schiebehülse 24 erfolgt gegen die Wirkung einer Feder (nicht gezeigt).

Neben den bereits in der Beschreibung der Fig. 1 erwähnten Komponenten besitzt der dargestellte Kinderwagen noch einen Bremshebel 29, der über einen Bowdenzug mit an den Hinterrädern 15 angreifenden Bremsen in Wirkeingriff steht.

In Fig. 3 ist die oben erwähnte zweite Bedienungseinrichtung 29 zur Entriegelung des Schiebers dargestellt. Nach Betätigung der Schiebehülse 24 kann der Schieber 19 über ein vorbestimmtes Maß hinaus in die Gestellholme 25, 26 hineingeschoben werden. Die zweite Bedienungseinrichtung 29 weist neben der Schiebehülse 24 den Sicherungshaken 27 und eine komplementären Hülse 30 auf, die stationär am oberen Ende des in Fahrtrichtung linken Gestellholms 25 befestigt ist und längs der die Schiebehülse 24 geführt ist. In der Schiebehülse 24 ist eine sich nach innen erstreckende Nocke 31 angebracht.

Bei einer Betätigung der Schiebehülse 24, d.h. bei einer Verschiebung derselben parallel zum zugeordneten Gestellholm drückt die Nocke 31 ein elastisch radial nach außen vorgespanntes Koppelelement in Form eines sich aus dem Schenkel 21 radial nach außen erstreckenden Bolzens (nicht gezeigt) nach innen in den Schenkel 21 hinein. Dadurch kann der Schieber 19 bzw. können die Schenkel 20, 21 desselben in die Gestellholme 25 und 26 über eine durch den erwähnten Bolzen begrenzte Strecke hinaus eingeschoben werden. Durch diesen Vorgang läßt sich, wie weiter unten noch genauer beschrieben wird, die Verrastung des Kinderwagens im aufgefalteten Zustand freigeben und der Kinderwagen zusammenfalten. An dieser Stelle sei nochmals darauf verwiesen, daß beide Bedienungseinrichtungen, d.h. die erste Bedienungseinrichtung 28 zur Verstellung des Schiebers 19 und die zweite Bedienungseinrichtung, nämlich Schiebehülse 24 gleichzeitig betätigt werden müssen, um den Kinderwagen zusammenfalten zu können.

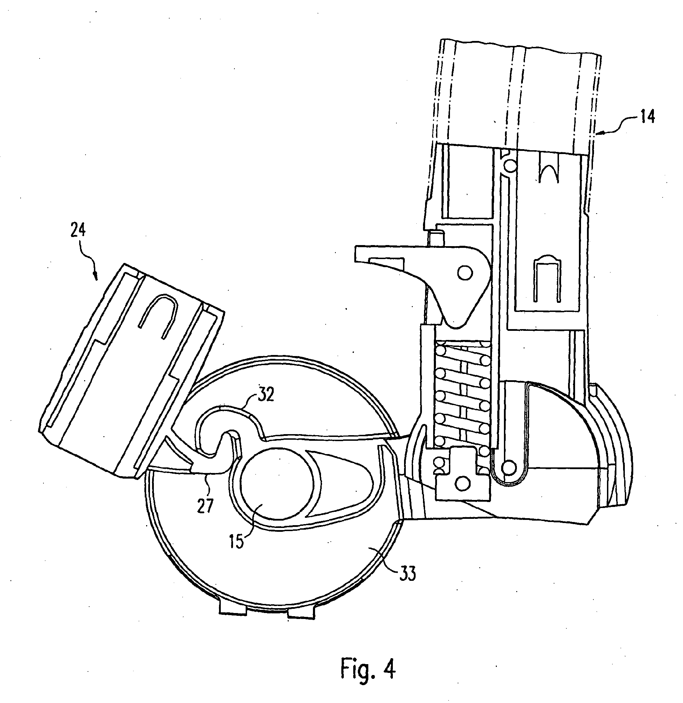

Im zusammengefalteten Zustand rastet der Sicherungshaken 27 der Schiebehülse 24, wie aus Fig. 4 ersichtlich, in ein als Komplementärhaken 32 ausgebildetes Transportsicherungselement ein, das an der Hinterachse 16 des Kinderwagens angebracht ist (hier als Teil eines hinteren Radlagergehäuses 33). Die Haken sind dabei so geformt bzw. positioniert, daß der Einrastvorgang durch das Eigengewicht des auf die Hinterachse gefalteten Teils des Kinderwagens und die Formgebung des Sicherungshakens 27 bzw. des Gegenhakens 32 ohne besondere manuelle Betätigung der Schiebehülse 24 erfolgen kann. Zum Entriegeln aus der zusammengefalteten Transportstellung muß die Schiebehülse manuell (gegen die Wirkung der Feder) in Längsrichtung des zugeordneten Gestellholms in Freigabestellung bewegt und somit in eine "Entsicherungsstellung" gebracht werden.

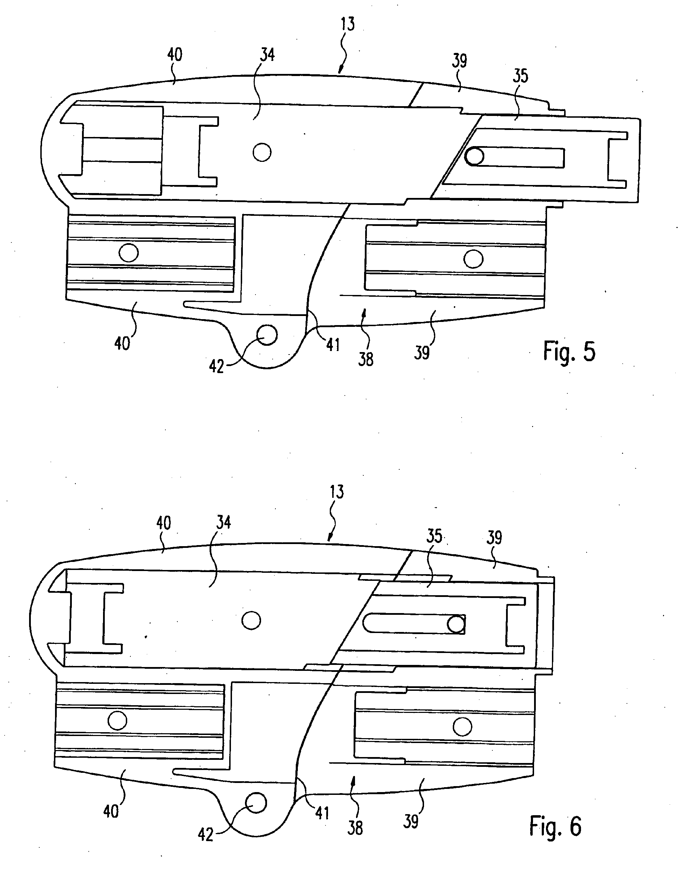

In den Figuren 5 und 6 ist jeweils ein im Bereich eines Faltgelenks 43 (s. Fig. 1) auf etwa halber Länge der Gestellholme 25, 26 angeordnetes Rastelement 13 zur Verrastung des Kinderwagens im aufgefalteten Zustand dargestellt. In Fig. 5 ist das Rastelement in verrastetem Zustand, d.h. also einem Zustand, in dem der Kinderwagen aufgefaltet und verrastet ist, gezeigt. Fig. 6 zeigt das Rastelement in einer "Entriegelungsstellung", die dadurch erzielt wird, daß der Schieber 19 über die oben erwähnte Strecke hinaus in die Gestellholme25, 26 hineingeschoben ist. In dieser Entriegelungsstellung läßt sich der Kinderwagen um das Faltgelenk 43 zusammenfalten.

Dargestellt ist in den jeweiligen Abbildungen das Rastelement 13, das neben der Zusammenfaltbarkeit des Kinderwagens auch der Befestigung des hinteren Holms 12 am vorderen Holm 11 dient. In einem Gehäuse 38 sind die freien Enden des vorderen Holms 11 und die freien Enden des hinteren Holms 12 befestigt. Das Gehäuse 38 besteht aus zwei Teilen, d.h. einem zum Griff 22 gerichteten Teil 39 und einem zur Vorderachse 17 gerichteten Teil 40 des Gehäuses 38. Die beiden Gehäuseteile 39, 40 stoßen im aufgeklappten Zustand des Kinderwagens an einer Trennfläche 41 aneinander. In verrastetem Zustand erstreckt sich ein gegen die Wirkung eines nicht gezeigten elastischen Elements (in den Fig. 5 und 6 nach links) beweglicher Rastbolzen 34 in den Teil 39 des Gehäuses 38 hinein. Dadurch, daß der Rastbolzen 34 mit dem Gehäuseteil 39 in Eingriff steht, wird ein Zusammenfalten des Kinderwagens verhindert. In der Entraststellung für den Kinderwagen wird, wie in Fig. 6 gezeigt, der Rastbolzen 34 entgegen der Wirkung des elastischen Elements durch ein freies Ende 35 der Schenkel 20, 21 des Schiebers 19 in den zur Vorderachse gerichteten Teil 40 des Gehäuses 38 hineingeschoben, und zwar etwa bis zur Trennfläche, so dass die Verriegelung durch den Rastbolzen 34 aufhebbar ist. Da die beiden Gehäuseteile 39, 40 um eine gemeinsame horizontale Gelenkachse 42 drehbar miteinander verbunden sind, läßt sich das Gehäuse 38 an der Trennfläche 41 unter Drehung um die Gelenkachse 42 aufklappen.

Der Kinderwagen kann daraufhin um die Achse 43 zusammengefaltet werden. Beim Auffalten des Kinderwagens rastet das freie Ende 35 des Schiebers 19 bedingt durch die Wirkung des oben erwähnten elastischen Elements selbsttätig in das griffseitige Teil 39 des Gehäuses 38 ein und sichert den Kinerwagen gegen Zusammenfalten.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichen

- 11: vorderer Holm
- 12: hinterer Holm
- 13: Rastelement
- 14: Stützholm
- 15: Hinterrad
- 16: Hinterachse
- 17: Vorderachse
- 18: Vorderrad
- 19: Schieber
- 20: Schenkel
- 21: Schenkel
- 22: Griff
- 23: Knopf für die Verstellung der Schieberschenkel
- 24: Schiebehülse
- 25: Gestellholm
- 26: Gestellholm
- 27: Sicherungshaken
- 28: Bedienungseinrichtung für die Verstellung des Schiebers
- 29: Bedienungseinrichtung zur Entriegelung des Schiebers
- 30: Hülse
- 31: Nocke
- 32: Komplementärhaken
- 33: Radlagergehäuse
- 34: Rastbolzen
- 35: dreies Ende des Schiebers 19
- 38: Gehäuse
- 39: griffseitiges Teil des Gehäuses 38
- 40: vorderachsseitiges Teil des Gehäuses 38
- 41: Trennfläche
- 42: Gelenkachse
- 43: Faltgelenk

## Patentansprüche

1. Kinderwagen mit einem auf Rädern (15, 18) verfahrbaren Rahmengestell, wobei das Rahmengestell um eine horizontal, sich parallel zu den Radachsen (16, 17) erstreckende Achse zusammenfaltbar ausgebildet ist und wobei der Faltmechanismus zwei voneinander unabhängige Bedienungseinrichtungen (28, 29) umfasst derart, dass zum Zweck einer Zusammenfaltung die gleichzeitige Betätigung beider Bedienungseinrichtungen (28, 29) erforderlich ist, **dadurch gekennzeichnet, dass** die erste (28) und/oder die zweite (29) Bedienungseinrichtung bei alleiniger Betätigung eine weitere Funktion am Kinderwagen besitzen.

2. Kinderwagen nach Anspruch 1, **dadurch gekennzeichnet, dass** die erste Bedienungseinrichtung (28) über ein Koppelelement, insbesondere einen elastisch vorgespannten Koppelstift, mit der zweiten Bedienungseinrichtung (29) in Wirkeingriff steht, derart, dass bei Bewegung der zweiten Bedienungseinrichtung (29) in die Stellung für eine Zusammenfaltung des Kinderwagens die erste Bedienungseinrichtung (28) durch das Koppelelement entriegelbar ist, so dass diese in eine Stellung bringbar ist, in der sich der Kinderwagen zusammenfalten lässt.

3. Kinderwagen nach Anspruch 1 oder 2, mit einem etwa U-förmig gebogenen Schieber (19) mit zwei Schenkeln (20, 21) und einem diese miteinander verbindenden Griff (22), **dadurch gekennzeichnet, dass** die erste Bedienungseinrichtung (28) gleichzeitig eine Veränderung der Längsposition des Schiebers (19) bzw. des Griffs (22) desselben erlaubt.

4. Kinderwagen nach einem der vorangehenden Ansprüche, **dadurch gekennzeichnet, dass** die zweite Bedienungseinrichtung (29) gleichzeitig als Transportsicherung für den Kinderwagen im zusammengeklappten Zustand dient.

5. Kinderwagen nach einem der vorangehenden Ansprüche, insbesondere nach Anspruch 4 oder 5, **dadurch gekennzeichnet, dass** die zweite Bedienungseinrichtung (29) eine auf einem der beiden Gestellholme (25, 26) längs- oder drehverschieblich gelagerte Schiebehülse (24) umfasst.

6. Kinderwagen nach Anspruch 5, **dadurch gekennzeichnet, dass** die Schiebehülse (24) einen Sicherungshaken (27) aufweist, der im zusammengeklappten Zustand des Kinderwagens mit einem komplementären Transportsicheiungselement an dem an den Schieber (19) herangeklappten Teil des Kinderwagens in Eingriff bringbar ist.

7. Kinderwagen nach Anspruch 6, **dadurch gekennzeichnet, dass** das Transportsicherungselement an der Hinterachse (16) des Kinderwagens angeordnet und insbesondere als Komplementärhaken (32) oder Hakenöse oder dgl. ausgebildet ist.

8. Kinderwagen nach einem der Ansprüche 5, 6 oder 7, **dadurch gekennzeichnet, dass** die Schiebehülse (24), der Sicherungshaken (27) und gegebenenfalls das komplementäre Transportsicherungselement (32) aus Leichtmetall, insbesondere Aluminium und/oder Kunststoff gefertigt sind.

9. Kinderwagen nach einem der vorangehenden Ansprüche, **dadurch gekennzeichnet, dass** die Betätigung der zweiten Bedienungseinrichtung (29) gegen die Wirkung eines elastischen Elements, insbesondere einer Feder erfolgt.

10. Kinderwagen nach einem der Ansprüche 5,6,7 oder 8, **dadurch gekennzeichnet, dass** die Betätigung der zweiten Bedienungseinrichtung (29) durch Ziehen, Drücken oder Drehen der Schiebehülse (24) längs des oder um den zugeordneten Schenkel (21) des Schiebers (19) erfolgt.

11. Kinderwagen nach Anspruch 3, **dadurch gekennzeichnet, dass** der Schieber (19) mit Rastelementen (13) zur Verrastung des Kinderwagens im aufgefalteten Zustand derart zusammenwirkt, dass diese durch den Schieber (19) nach Freigabe desselben durch die zweite Bedienungseinrichtung (29) in eine Entriegelungsstellung bringbar sind, in der sich der Kinderwagen zusammenfalten lässt.

## Claims

1. A pram fitted with a mobile chassis on wheels (15, 18), wherein the chassis is provided foldable around a horizontal axle extending parallel to the wheel axles (16, 17) and wherein the folding mechanism includes two operating devices (28, 29) independent from one another so that both operating devices (28, 29) must be operated simultaneously for folding purposes, **characterised in** the first (28) and/or the second (29) operating device possess another function for the pram when operated on its own.

2. A pram according to claim 1, **characterised in that** the first operating device (28) is engaged via a coupling element, in particular an elastically pre-stressed coupling pin, in the second operating device (29) in such a way that when moving the second operating device (29) in the position enabling to fold up the pram, the first operating device (28) can be released by the coupling element so that said operating device can adopt a position wherein the pram can be folded up.

3. A pram according to claim 1 or 2, with an approx. U-shaped bent pusher (19) fitted with two sides (20, 21) and a handle (22) connecting them together, **characterised in that** the first operating device (28) simultaneously allows for changing the longitudinal position of the pusher (19) or of the handle (22).

4. A pram according to one of the previous claims, **characterised in that** the second operating device (29) can be used simultaneously as a transport securing means for the pram in folded condition.

5. A pram according to one of the previous claims, in particular according to claim 4 or 5, **characterised in that** the second operating device (29) includes a sliding sleeve (24) mobile longitudinally or rotatably on one of both frame spars (25, 26).

6. A pram according to claim 5, **characterised in that** the sliding sleeve (24) includes a safety hook (27), which, with the pram in folded condition, can be engaged with a complementary transport securing element into the section of the pram which is folded-in at the level of the pusher (19).

7. A pram according to claim 6, **characterised in that** the transport securing element is arranged by the rear axle (16) of the pram and is provided in particular as a complementary hook (32) or hook eye or similar.

8. A pram according to any of the claims 5, 6 or 7, **characterised in that** the sliding sleeve (24), the safety hook (27) and possibly the complementary transport securing element (32) are made of light metal, in particular aluminium and/or synthetic material.

9. A pram according to one of the previous claims, **characterised in that** the actuation of the second operating device (29) counteracts the action of a resilient element, in particular of a spring.

10. A pram according to one of the claims 5,6,7 or 8, **characterised in that** the actuation of the second operating device (29) consists in pulling, pushing or rotating the sliding sleeve (24) along or around the corresponding side (21) of the pusher (19).

11. A pram according to claim 3, **characterised in that** the pusher (19) co-operates with locking elements (13) designed for locking the pram in unfolded condition, so that said elements can be brought into unlocked position by the pusher (19) once released via the second operating device (29), a position wherein the pram can be folded up.

## Revendications

1. Poussette munie d'un châssis mobile sur roues (15, 18), le châssis étant repliable autour d'un essieu horizontal, s'étendant parallèlement aux essieux (16, 17) et le mécanisme de pliage comprenant deux dispositifs de commande (28, 29) indépendants l'un de l'autre, l'actionnement simultané des deux dispositifs de commande (28, 29) étant nécessaire pour replier la poussette, **caractérisée en ce que** le premier (28) et/ou le second (29) dispositif de commande possèdent une autre fonction au niveau de la poussette si on les actionne individuellement.

2. Poussette selon la revendication 1, **caractérisée en ce que** le premier dispositif de commande (28) est en prise grâce à un élément d'accouplement, en particulier une goupille d'accouplement précontrainte élastiquement, avec le second dispositif de commande (29), de sorte qu'en cas de mouvement du second dispositif de commande (29) dans la position permettant de replier la poussette, le premier dispositif de commande (28) est déverrouillable par l'élément d'accouplement, et ledit dispositif peut alors adopter une position dans laquelle la poussette peut être repliée.

3. Poussette selon la revendication 1 ou 2, munie d'un poussoir (19) recourbé en forme de U et présentant deux côtés (20, 21) et d'une poignée (22) les reliant l'un à l'autre, **caractérisée en ce que** le premier dispositif de commande (28) permet simultanément de modifier la position longitudinale du poussoir (19) ou de la poignée (22).

4. Poussette selon l'une quelconque des revendications précédentes, **caractérisée en ce que** le second dispositif de commande (29) sert simultanément de système de fixation de transport pour la poussette en condition repliée.

5. Poussette selon l'une quelconque des revendications précédentes, en particulier selon la revendication 4 ou 5, **caractérisée en ce que** le second dispositif de commande (29) comprend un manchon coulissant (24) mobile dans l'axe longitudinal ou en rotation sur l'un des deux longerons (25, 26).

6. Poussette selon la revendication 5, **caractérisée en ce que** le manchon coulissant (24) présente un crochet de sécurité (27), que l'on peut mettre en prise avec la poussette en condition repliée à l'aide d'un élément de sécurité pour le transport au niveau de la partie repliée de la poussette contre le poussoir (19).

7. Poussette selon la revendication 6, **caractérisée en ce que** l'élément de sécurité pour le transport est disposé au niveau de l'essieu arrière (16) de la poussette et prend la forme en particulier d'un crochet complémentaire (32), oeil de crochet ou similaire.

8. Poussette selon l'une quelconque des revendications 5, 6 ou 7, **caractérisée en ce que** le manchon coulissant (24), le crochet de sécurité (27) et le cas échéant l'élément de sécurité pour le transport complémentaire (32) sont en métal léger, en particulier aluminium et/ou matériau synthétique.

9. Poussette selon l'une quelconque des revendications précédentes, **caractérisée en ce que** l'actionnement du second dispositifde commande (29) s'oppose à l'effet d'un élément élastique, en particulier d'un ressort.

10. Poussette selon l'une quelconque des revendications 5,6,7 ou 8, **caractérisée en ce que** l'actionnement du second dispositif de commande (29) consiste à tirer, pousser ou tourner le manchon coulissant (24) le long ou autour du côté correspondant (21) du poussoir (19).

11. Poussette selon la revendication 3, **caractérisée en ce que** le poussoir (19) coopère avec des éléments de blocage (13) pour bloquer la poussette en condition dépliée, pour que lesdits éléments puissent adopter une position de déverrouillage à l'aide du poussoir (19) après déverrouillage de celui-ci et grâce au second dispositif de commande (29), afin de replier la poussette.
